# EUROPÄISCHE PATENTSCHRIFT

(11) **EP 0 485 898 B1**
(45) Veröffentlichungstag und Bekanntmachung des Hinweises auf die Patenterteilung: **01.03.1995**
(21) Anmeldenummer: 91119048.6
(22) Anmeldetag: 08.11.1991
(51) Int. Cl.: A01C 17/00, A01C 15/00

(54) **Schleuderdüngerstreuer**
Broadcaster
Epandeur centrifuge

(30) Priorität: 14.11.1990 DE 4036235
(43) Veröffentlichungstag der Anmeldung: 20.05.1992
(73) Patentinhaber: Amazonen-Werke H. Dreyer GmbH & Co. KG, D-49205 Hasbergen (DE)
(72) Erfinder: Dreyer, Heinz, Dipl.-Ing. Dr., W-4507 Hasbergen (DE)

(56) Entgegenhaltungen:
- EP-A- 0 084 872
- EP-A- 0 287 006
- DE-A- 2 041 804
- DE-A- 3 310 694
- DE-A- 3 604 954
- DE-A- 4 101 681
- FR-A- 1 400 911
- US-A- 3 017 189

## Beschreibung

Die Erfindung betrifft einen Schleuderdüngerstreuer gemäß des Oberbegriffes des Patentanspruches 1.

Ein derartiger Schleuderdüngerstreuer ist durch die EP-03 15 664 (PCT WO88/09609) bekannt. Bei diesem Schleuderdüngerstreuer sind die Schleuderscheiben an Auslegerarmen schwenkbar unterhalb der Auslauföffnungen angeordnet. Hierdurch kann die Aufgabenfläche des Düngers auf den Schleuderscheiben mittels einer Stellvorrichtung eingestellt werden. Desweiteren können aufgrund der Anordnung der Schleuderscheiben an Schwenkarmen diese aus ihrer Lage unterhalb der Dosieröffnungen weggeschwenkt werden, so daß beim Abdrehen der Dünger nicht auf die Schleuderscheiben sondern in einem unterhalb der Dosieröffnungen angeordneten Auffangbehälter fällt. Dieses Wegschwenken ist jedoch nachteilig, weil nicht ohne weiteres sichergestellt ist, daß der Antrieb der Schleuderscheiben unterbrochen wird. Hierfür müssen aufwendige Vorrichtungen getroffen werden, so daß in der Abdrehposition der Schleuderscheiben keine Personen von den Schleuderscheiben verletzt werden können. Darüberhinaus ist die schwenkbare Anordnung relativ aufwendig.

Der Erfindung liegt die Aufgabe zugrunde, eine einfache Verstellung für die Schleuderscheiben gegenüber den Dosierorganen zu schaffen.

Diese Aufgabe wird erfindungsgemäß durch die Maßnahme gemäß des Kennzeichens des Anspruches 1 gelöst.

Infolge dieser Maßnahme läßt sich die Schleuderscheibe in äußerst einfacher Weise gegenüber der Dosiereinrichtung verschieben. Gleichzeitig wird hierdurch die Grundvorraussetzung geschaffen, daß die Schleuderscheibe durch die Verschiebbung der Schleuderscheibe zum Zwecke des Abdrehens von ihrem Antrieb abgekuppelt wird. Hierdurch sind Verletzungen von Personen durch die Schleuderscheibe beim Abdrehvorgang in jedem Falle ausgeschlossen.

In einer einfachen Ausführungsform ist eine gerade Schiebeführung vorgesehen. Diese Ausführung wird man bevorzugt wählen, wenn ausschließlich nur ein Verschieben der Schleuderscheibe zum Zwecke des Abdrehens gewünscht ist.

Für die Fälle, wo man gleichzeitig jedoch auch über das Verschieben der Schleuderscheiben in einem kleinen Bereich eine Streubildkorrektur erreichen will, ist es vorteilhaft, wenn eine gekrümte Schiebeführung vorgesehen ist.

In einer weiteren Ausführung, insbesondere wenn eine gerade Schiebeführung vorgesehen ist, kann der Rahmen der Schiebeführung zusätzlich verschwenkbar am Rahmen des Schleuderdüngerstreuers angeordnet sein.

Wenn mittels der Verstellung der Schleuderscheibe gegenüber der Dosiereinrichtung eine Streubildkorrektur erreicht werden soll, ist bei einer Ausführungsform vorgesehen, daß für die Verstellung der Schleuderscheibenlagergehäuses eine fernbedienbare Stellvorrichtung vorgesehen ist. Durch diese fernbedienbare Stellvorrichtung kann während des Ausbringvorganges vom Schleppersitz aus das Schleuderscheibenlagergehäuse verstellt werden.

Eine besonders vorteilhafte Ausführungsform ergibt sich dadurch, daß die Schleuderscheiben von einem Getriebe über eine teleskopierbare Welle angetrieben werden, daß bei einem Verschieben der Schleuderscheibe zum Zwecke des Abdrehens des Schleuderdüngerstreuers (Eichvorgang) die beiden Teile der teleskopierbaren Welle außer Eingriff kommen. Infolge dieser Maßnahmen ist in jedem Falle sichergestellt, daß in der Abdrehposition der jeweiligen Schleuderscheibe der Antrieb über die Schleuderscheibe unterbrochen ist. Diese Ausführung wird man insbesondere bei einem Vierscheibendüngerstreuer bevorzugen.

Um optimal Abdrehen zu können, weist die Schiebeführung eine derartige Länge aus, daß die Schleuderscheibe vollkommen unter der Dosiereinrichtung wegschiebbar ist. Somit kann dann der Dünger von der Dosiereinrichtung ungehindert in einen Auffangbehälter fließt.

Bei Schleuderdüngerstreuern, bei denen im seitlichen Außenbereich der Schleuderscheibe eine Leitvorrichtung angeordnet ist, ist vorgesehen, daß die Leitvorrichtung derart angeordnet ist, daß sie mit der Schleuderscheibe verstellt oder verschoben wird.

Bei Düngerstreuern, bei denen die Schleuderscheiben nicht ganz unterhalb der Dosiereinrichtung aus konstruktiven Gründen wegschwenkbar ist, wobei der Antrieb jedoch zu unterbrechen ist, ist vorgesehen, daß in der Schleuderscheibe eine Durchtrittsöffnung sich befindet und daß diese Öffnung im Schatten eines Wurfelementes angeordnet ist. Infolge dieser Maßnahmen kann dann beim Abdrehvorgang, in dem die Durchtrittsöffnung in der Schleuderscheibe, in Draufsicht gesehen, mit der Dosiereinrichtung zur Deckung gebracht ist, auch vorteilhaft abgedreht werden, wobei dann der Dünger von der Dosiereinrichtung durch die Durchtittsöffnung in einen darunter befindlichen Auffangbehälter fließen kann.

Weitere Einzelheiten der Erfindung sind den übrigen Unteransprüchen, der Beispielsbeschreibung und den Zeichnungen zu entnehmen. Hierbei zeigen
- Fig. 1: einen Schleuderdüngerstreuer in der Ansicht von hinten,
- Fig. 2: den Schleuderdüngerstreuer gemäß Fig. 1 in der Draufsicht,
- Fig. 3: den Schleuderdüngerstreuer gemäß Fig. 1 in der Ansicht III - III und in Prinzipdarstellung,
- Fig. 4: den Schleuderdüngerstreuer in der Darstellungsweise gemäß Fig. 3, wobei jedoch die rechte Schleuderscheibe mit der Leitvorrichtung in Abdrehstellung verschoben ist,
- Fig. 5: einen weiteren Schleuderdüngerstreuer in der Ansicht von hinten,
- Fig. 6: die Anordnung der Schleuderscheiben in einer Schiebeführung bei dem Schleuderdüngerstreuer gemäß Fig. 5 in der Ansicht VI - VI und

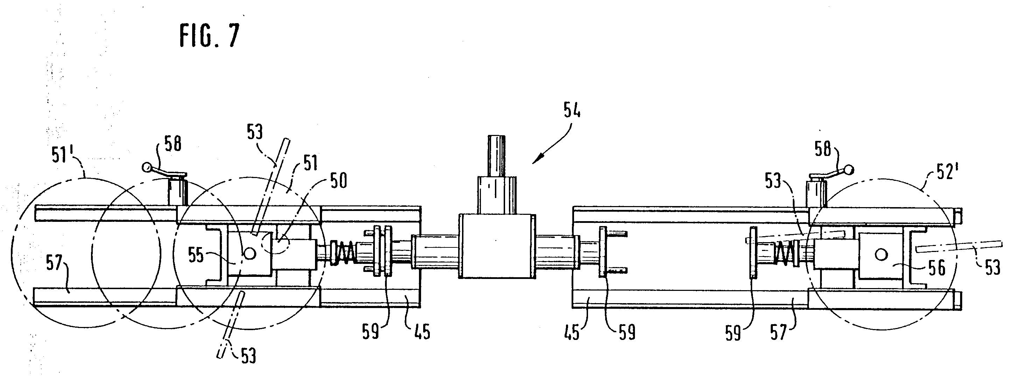

- Fig. 7: die Anordnung der Schleuderscheiben nach Fig. 6, wobei jedoch die rechte Schleuderscheibe in Abdrehstellung verschoben ist.

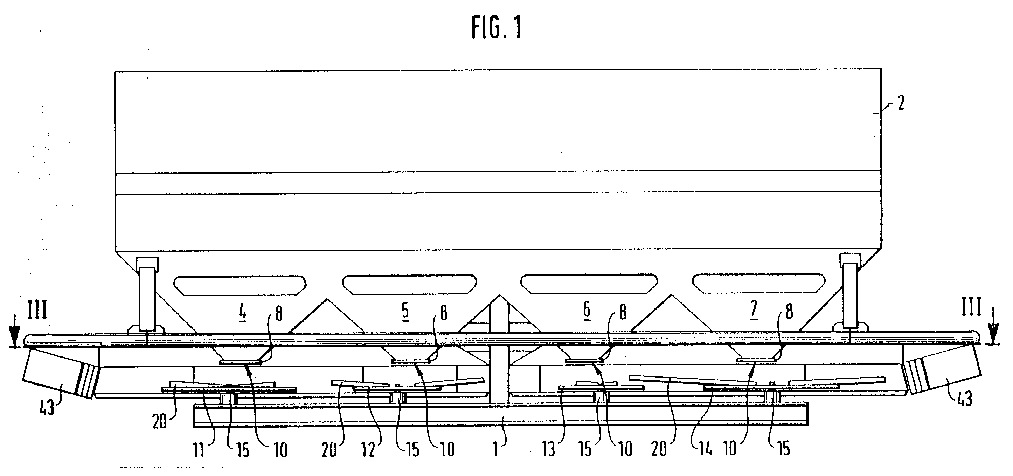

Der Schleuderdüngerstreuer gemäß Fig. 1 weist den Rahmen 1 und den Vorratsbehälter 2 auf. Auf der Vorderseite des Rahmens 1 sind die Dreipunktkupplungselemente 3 angeordnet, über welche der Schleuderdüngerstreuer an den nicht dargestellten Dreipunktkraftheber eines Ackerschleppers anzukuppeln ist. Der Vorratsbehälter 2 ist in seinem unteren Bereich in die vier Trichterspitzen 4, 5, 6 und 7 aufgeteilt. Jede Trichterspitze 4 bis 7 ist mittels einer Bodenplatte 8 verschlossen, in welcher sich jeweils die Auslaßöffnung 9 befindet. Unterhalb der Bodenplatte 9 ist ein einstellbarer Schieber angeordnet, mittels welchem die Auslaßöffnung 9 zu verschließen und in ihrer Öffnungsweite einzustellen ist. Die Auslaßöffnung 9 und der darunter angeordnete Schieber bilden jeweils die Dosiereinrichtung 10.

Unterhalb jeder Dosiereinrichtung 10 und den Trichterspitzen 4 bis 7 befinden sich die Schleuderscheiben 11, 12, 13 und 14. Die Schleuderscheiben 11 bis 14 sind jeweils auf einer Getriebeausgangswelle 15 der Getriebe 16, 17, 18 und 19 angeordnet. Diese Getriebe sind an dem Rahmen 1 angeordnet.

Auf den Schleuderscheiben 11 bis 14 sind die Wurfelemente 20 angeordnet. Die Wurfelemente 20 auf den beiden Schleuderscheiben 11 und 14 weisen eine größere Länge als die Wurfelemente 20 auf den Schleuderscheiben 12 und 13 auf.

Die sich in dem Vorratsbehälter 2 befindlichen Düngerpartikel werden über die Dosierorgane 10 jeweils den Schleuderscheiben 11 bis 15 zugeführt. Hierbei werden die Düngerpartikel von den Wurfschaufeln 20 der Schleuderscheiben 11 bis 14 über einen Bereich abgeschleudert, der die Baubreite des gesamten Schleuderdüngerstreuers wesentlich übersteigt. Die Streubreite des Düngerstreuers ist veränderbar, wobei die Schleuderscheiben 11 bis 14 mit den Wurfelementen 20 die Düngerpartikel in lückenlos seitlich aneinander anschließende und überlappende Streufächer über die zu bestreuende Bodenoberfläche in einem gleichmäßigen Streubild verteilen. Die beiden äußeren Schleuderscheiben 11 und 14 erzeugen Streufächer, die sich von dem Streuer her und in Fahrtrichtung gesehen im wesentlichen in die Breite seitlich des Schleuderdüngerstreuers erstrecken, während die von den beiden anderen Schleuderscheiben 12 und 13 erzeugten Streufächer von dem Streuer her gesehen und bezogen auf die Fahrtrichtung sich im wesentlichen nach hinten und in der Breite erstrecken.

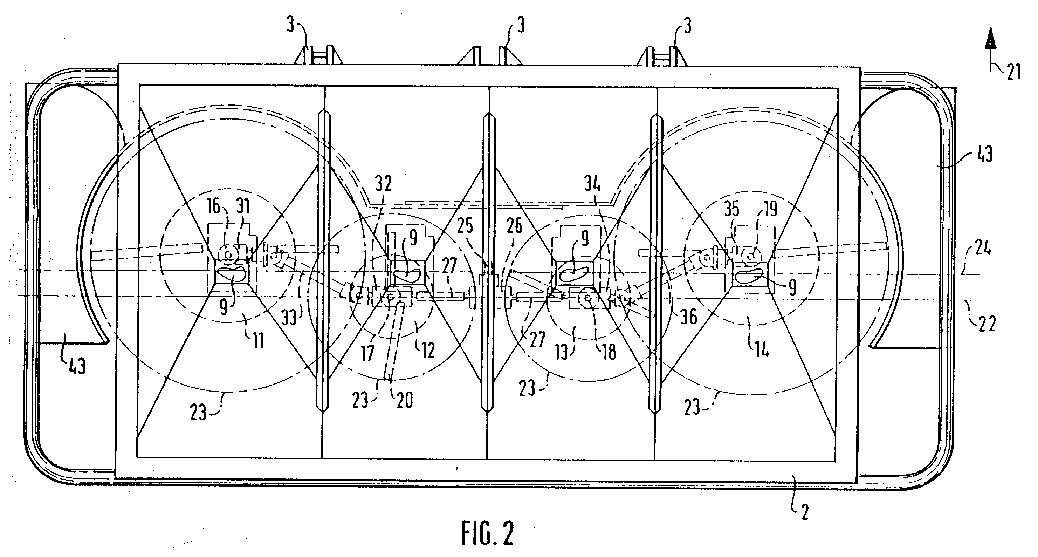

Die Schleuderscheiben 11 bis 14 sind, wie ein Blick auf die Fig. 2 zeigt, zu der im rechten Winkel zu der Fahrtrichtung 21 verlaufenden Linie 22 versetzt angeordnet. Die Linie 22 verläuft durch die Drehachsen 17 und 18 der beiden inneren Schleuderscheiben 12 und 13. Die Schleuderscheibenantriebswellen 16 und 19 der äußeren Schleuderscheiben 11 und 14 sind gegenüber der Linie 12 versetzt, bezogen auf die Fahrtrichtung, nach vorne angeordnet. Durch die mit strichpunktierten Linien 23 sind die äußeren Flugkreise der äußeren Teile der längeren Wurfschaufeln 20 angedeutet.

Der Vorratsbehälter 2 ist, wie bereits gesagt, in seinem unteren Bereich in die Auslauftrichtern 4 bis 7 aufgeteilt. Die Anzahl der Auslauftrichter entspricht der Anzahl der Schleuderscheiben 11 bis 15. Die Dosierorgane, welche von den Auslauföffnungen 9 in Verbindung mit den Schiebern gebildet werden, liegen auf einer im rechten Winkel zur Fahrtrichtung 21 verlaufenden Linie 24.

Die Schleuderscheiben 11 bis 15 werden über eine nicht dargestellte Gelenkwelle, welche an die Eingangswelle 25 des Mittelgetriebes 26 angeschlossen wird, und über die von den Wellen 27, 28, 29 und 30 gebildeten Wellenzug angetrieben. Hierbei sind jeweils zwischen dem Getriebe 31 und 32 eine Gelenkwelle 33 und zwischen dem Getriebe 34 und dem Getriebe 35 die Gelenkwelle 36 angeordnet.

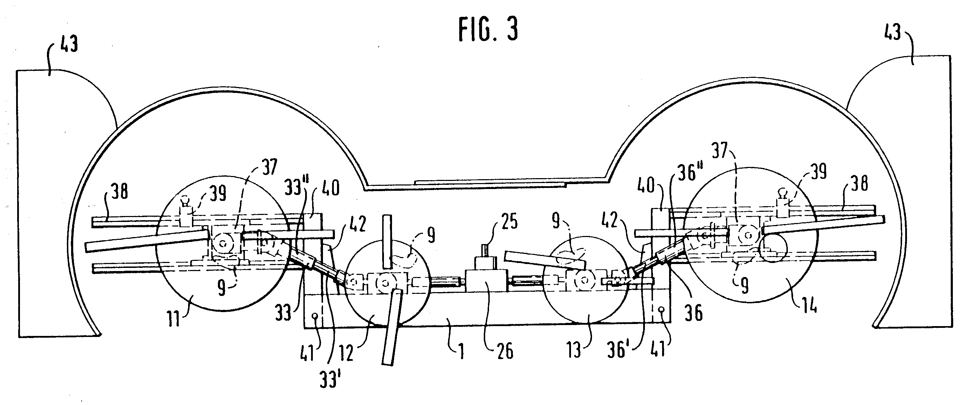

Wie die Fig. 3 zeigt, sind die äußeren Schleuderscheiben 11 und 14 verschiebbar am Rahmen 1 des Schleuderdüngerstreuers angeordnet. Hierzu sind die Lagergehäuse 37 der äußeren Schleuderscheiben 11 und 14 mit einer Schiebeführung 38 verschiebbar gegenüber dem Rahmen 1 und der Dosiereinrichtung des Schleuderdüngerstreuers angeordnet. Aufgrund dieser Schiebeführung 38 kann das Lagergehäuse 37 jeweils mit den Schleuderscheiben 11 bzw. 14 seitlich nach außen verschoben werden. Hierdurch werden die Aufgabenflächen des Düngers auf den Schleuderscheiben 11 bzw. 14 verlagert. Hierzu ist zwischen der Schiebeführung 38 und dem Lagergehäuse 37 jeweils die Stellvorrichtung 39 vorgesehen, mittels welcher das Lagergehäuse 37 jeweils exakt definiert in der Schiebeführung 38 eingestellt werden kann.

Darüberhinaus ist die Schiebeführung 38 an einem Schwenkarm 40 mittels des Gelenkes 41 jeweils an dem Rahmen 1 befestigt. Zwischen dem Schwenkarm 40 und dem Rahmen 1 ist eine weitere Stellvorrichtung 42 vorgesehen, mittels welcher der Schwenkarm 40 und somit die Schiebeführung 38 relativ zu dem Rahmen 1 und zu der jeweiligen Dosiereinrichtung in unterschiedliche Positionen einstellbar ist. Hierdurch ist es möglich, daß die Aufgabefläche des Düngers auf der Schleuderscheibe 11 bzw. 14 jeweils genau eingestellt werden kann. Somit kann also eine Streubildkorrektur in einfacher Weise vorgenommen werden. Es ist möglich, die Stellvorrichtung 39 bzw. 42 mittels einer Fernbedienungsvorrichtung vom Schleppersitz aus einstellbar auszuführen.

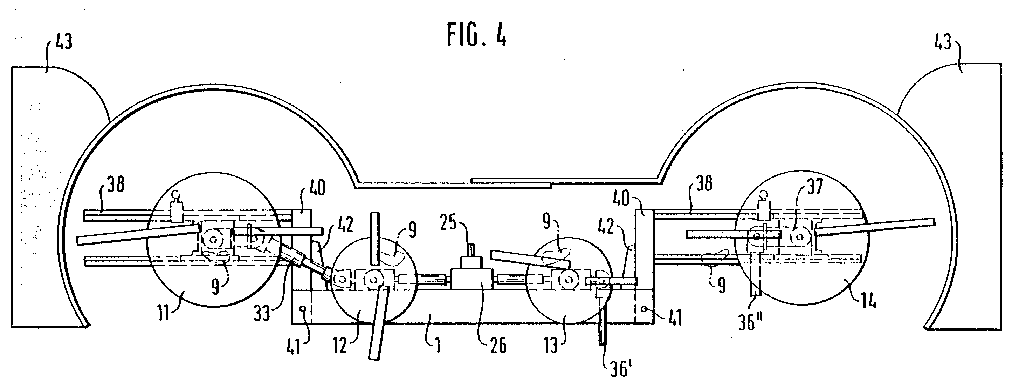

Weiterhin ist die Schiebeführung 38 derart ausgelegt, daß die Getriebegehäuse 37 in der Schiebeführung 38 soweit verschoben werden können, daß bei einem Verschieben der Schleuderscheiben zu Zwecke des Abdrehens des Schleuderdüngerstreuers (Eichvorgang) die beiden Teile 36 und 36'' der teleskopierbaren Welle 36 außer Eingriff kommen, wie dieses Fig. 4 zeigt. Hierbei wird, wie in Fig. 4 schematisch dargestellt ist, gleichzeitig auch die auf der Außenseite der Schleuderscheibe 14 angeordnete Leitvorrichtung 43 und 44 mit verschoben. Hierbei ist die Leitvorrichtung 43 und 44 derart angeordnet, daß sie gleichzeitig mit den Schleuderscheiben 14 verstellt und verschoben wird. Die Schiebeführung 38 weist eine derartige Länge auf, daß die Schleuderscheibe 14 vollkommen unterhalb der Dosiereinrichtung 9 wegschiebbar ist, wie in Fig. 4 erkennbar ist.

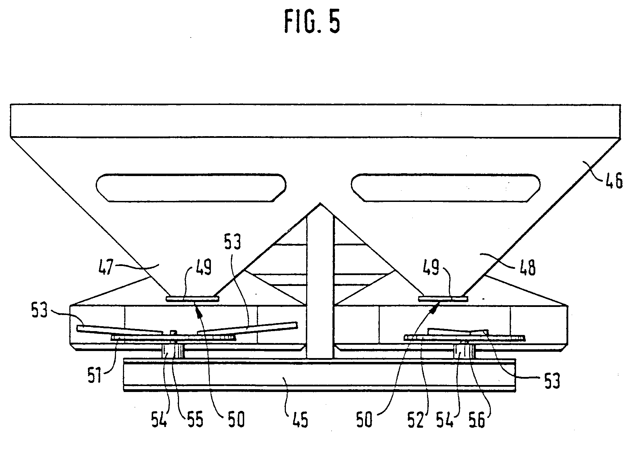

Der Schleuderdüngerstreuer gemäß Fig. 5 weist den Rahmen 45 und den Vorratsbehälter 46 auf. Auf der Vorderseite des Rahmens 45 sind Dreipunktkupplungselemente angeordnet, über welche der Schleuderdüngerstreuer an den nicht dargestellten Dreipunktkraftheber des Schleppers anzukuppeln ist. Der Vorratsbehälter 46 ist in seinem unteren Bereich in die beiden Trichterspitzen 47 und 48 aufgeteilt. Jede Trichterspitze 47 und 48 ist mittels einer Bodenplatte 49 verschlossen, in welcher sich eine Auslaßöffnung befindet. Unterhalb der Bodenplatte 9 befindet sich ein einstellbarer Schieber, mittels welchem die Auslaßöffnung zu verschließen und in ihrer Öffnungsweite einzustellen ist. Die Auslaßöffnung 9 und der darunter angeordnete Schieber bilden die Dosiereinrichtung 50. Unterhalb dieser Dosiereinrichtung und den Trichterspitzen 47 und 48 befindet sich jeweils die Schleuderscheibe 51 oder 52 mit den Wurfschaureln 53. Die Schleuderscheiben 51 und 52 werden im einander entgegengesetzem Drehsinn über das Getriebe 54 angetrieben. Auf jeder Schleuderscheibe 51 und 52 sind Wurfschaufeln 53 unterschiedlicher Länge angeordnet.

Die sich im Vorratsbehälter 46 befindlichen Düngemittel werden über die Dosierorgane 50 jeweils den Schleuderscheiben 51 und 52 in einstellbaren Mengen zugeführt. Hierbei werden die Düngerpartikel von den Wurfschaufeln 53 der Schleuderscheiben 51 und 52 über einen Bereich abgeschleudert, der die Baubreite des gesamten Schleuderdüngerstreuers wesentlich übersteigt.

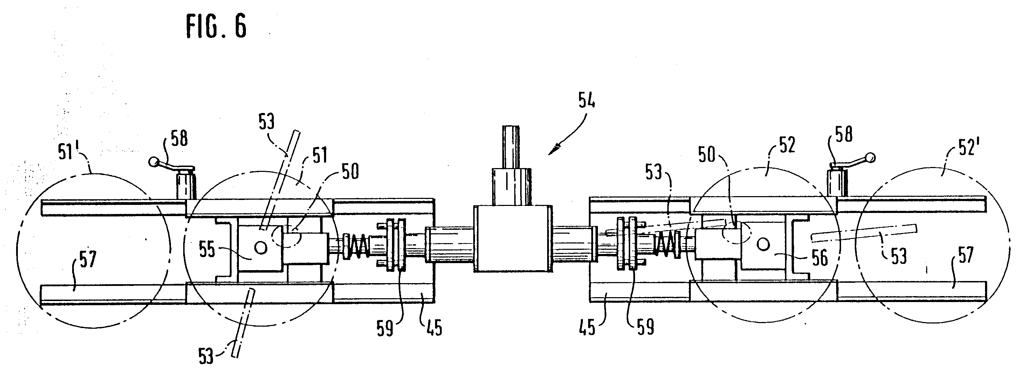

Die Getriebegehäuse 55 und 56 des Getriebes 54 sind am Rahmen 45 jeweils in einer Schiebeführung 57 verschiebbar angeordnet. Mittels der Stellvorrichtung 58 sind die Schleuderscheiben 51 und 52 durch Verschieben der Getriebegehäuse 58 bzw. 56 in der Schiebeführung 57 innerhalb der Schiebeführung 57 verstellbar und in verschiedene Positionen einstellbar. Hierdurch läßt sich der Aufgabepunkt des Düngers auf der jeweilige Schleuderscheibe verändern. Desweiteren sind die Schiebeführungen 57 derart ausgelegt, daß die Schleuderscheiben 52 bzw. 51 vollkommen unterhalb der Dosiereinrichtung 50 wegschiebbar sind. Dieses ist in Fig. 6 mit den strichpunktierten Linien 52' und 51' angedeutet. In dem Antriebsstrang zum Antrieb der Schleuderscheiben 51 und 52 ist jeweils eine Kupplung 59 angeordnet. Diese Kupplung 59 läßt es zu, daß in kleinen Bereichen die Schleuderscheibe verschoben werden kann, ohne daß die Kupplung außer Eingriff kommt, wenn die Schleuderscheibe zum Zwecke der Verlagerung der Aufgabefläche des Düngers auf der Schleuderscheibe in kleinen Grenzen verschoben wird. Wenn die Schleuderscheibe 51 bzw. 52 aus der mit durchzogenen Linien wiedergegebene Position in die mit strichpunktierten Linien wiedergegebene Position 51' bzw. 52' geschoben wird, kommt die Kupplung 51 außer Eingriff, so daß die Schleuderscheibe 52 bzw. 51 nicht mehr angetrieben werden kann. Somit ist also eine Verletzungsgefahr durch die Schleuderscheibe 51 bzw. 52, welche sich in Abdrehstellung befindet, ausgeschlossen, weil der Antrieb unterbrochen ist.

Somit werden also durch die neuartige Schiebeführung wesentliche Vorteile erreicht. Zunächst können die Schleuderscheiben in feinen Stufen oder stufenlos innerhalb der Schiebeführung zum Zwecke der Verlagerung der Aufgabeflächen des Düngers auf der Schleuderscheibe leicht verschoben werden. Weiterhin können die Schleuderscheiben aufgrund der Anordnung in einer Schiebeführung sehr einfach nach außen in eine Abdrehstellung verschoben werden. Hierbei wird automatisch der Antrieb abgekuppelt. Somit kann auch sehr einfach der Auffangbehälter unterhalb der Dosiereinrichtung angeordnet werden. Weiterhin läßt sich sehr einfach die jeweilige Schleuderscheibe austauschen, falls dieses gewünscht ist, wenn die Schleuderscheibe sich in Außenstellung, d.h. in Abdrehstellung befindet.

## Patentansprüche

1. Schleuderdüngerstreuer mit einem Vorratsbehälter (2,46), in dessen unteren Bereich Dosierorgane (10,50) angeordnet sind und mit unterhalb der Dosierorgane rotierend angetriebenen und mit Wurfelementen (20,53) besetzten Schleuderscheiben (11,14,51,52), denen das sich im Vorratsbehälter befindliche Streugut in einstellbaren Mengen zuführbar ist, wobei die ein Lagergehäuse (37,55,56) aufweisende(n) Schleuderscheiben(n) in ihrer Lage zu den Dosierorganen in etwa horizontaler Ebene verstellbar sind, so daß die Lage der Aufgabenfläche auf der (den) Schleuderscheibe(n) veränderbar ist, dadurch gekennzeichnet, daß zur Verstellung der Schleuderscheibe(n) (11,14,51,52) das Lagergehäuse (37,55,56) in einer Schiebeführung (38,57) verschiebbar angeordnet ist, sodaß die Schleuderscheibe(n) von ihrem Antrieb abgekuppelt werden kann (können).

2. Schleuderdüngerstreuer nach Anspruch 1, dadurch gekennzeichnet, daß eine gerade Schiebeführung (38,57) vorgesehen ist.

3. Schleuderdüngerstreuer nach Anspruch 1, dadurch gekennzeichnet, daß eine gekrümmte Schiebeführung vorgesehen ist.

4. Schleuderdüngerstreuer nach einem oder mehreren der vorstehenden Ansprüche, dadurch gekennzeichnet, daß der Rahmen (40) der Schiebeführung (38) verschwenkbar an dem Rahmen (1) des Schleuderdüngerstreuers angeordnet ist.

5. Schleuderdüngerstreuer nach einem oder mehreren der vorstehenden Ansprüche, dadurch gekennzeichnet, daß der Schiebeführungsrahmen (38) verstellbar und in verschiedenen Stellungen verstellbar ist.

6. Schleuderdüngerstreuer nach einem oder mehreren der vorstehenden Ansprüche, dadurch gekennzeichnet, daß das Schleuderscheibenlagergehäuse (37,55,56) innerhalb der Schiebeführung (38,57) verstellbar und in verschiedene Positionen einstellbar ist.

7. Schleuderdüngerstreuer nach einem oder mehreren der vorstehenden Ansprüche, dadurch gekennzeichnet, daß für die Verstellung des Schleuderscheibenlagergehäuses eine fernbedienbare Stellvorrichtung vorgesehen ist.

8. Schleuderdüngerstreuer nach einem oder mehreren der vorstehenden Ansprüche, dadurch gekennzeichnet, daß für die Verstellung des Schiebeführungsrahmens eine fernbedienbare Stellvorrichtung vorgesehen ist.

9. Schleuderdüngerstreuer nach einem oder mehreren der vorstehenden Ansprüche, dadurch gekennzeichnet, daß die Schleuderscheibe(n) mittels Hydraulikmotor(e) antreibbar ist (sind).

10. Schleuderdüngerstreuer nach einem oder mehreren der vorstehenden Ansprüche, dadurch gekennzeichnet, daß die Schleuderscheibe von einem Getriebe (26) über eine teleskopierbare Welle (33,36) angetrieben wird, daß bei einem Verschieben der Schleuderscheibe (11,14) zum Zwecke des Abdrehens des Schleuderdüngerstreuers (Eichvorgang) die beiden Teile (33',33'',36',36'') des teleskopierbaren Welle (33,36) außer Eingriff kommen.

11. Schleuderdüngerstreuer nach einem oder mehreren der vorstehenden Ansprüche, dadurch gekennzeichnet, daß die Schiebeführung (38,57) eine derartige Länge aufweist, daß die Schleuderscheibe (11,14,51,52) vollkommen unterhalb der Dosiereinrichtung (9,50) wegschiebbar ist.

12. Schleuderdüngerstreuer nach einem oder mehreren der vorstehenden Ansprüche, wobei im seitlichen Außenbereich der Schleuderscheibe (11,14) ein Leitvorrichtung (43,44) angeordnet ist, dadurch gekennzeichnet, das Leitvorrichtung (43,44) derart angeordnet ist, daß sie mit der Schleuderscheibe (11,14) verstellt oder verschoben wird.

13. Schleuderdüngerstreuer nach einem oder mehreren der vorstehenden Ansprüche, dadurch gekennzeichnet, daß in der Schleuderscheibe eine Durchtrittsöffnung sich befindet, daß diese Öffnung im Schatten eines Wurfelementes angeordnet ist.

## Claims

1. Centrifugal fertiliser broadcaster, including a hopper (2, 46), metering members (10, 50) being disposed in the lower region of said hopper, and centrifugal discs (11, 14, 51, 52), which are rotatably driven beneath the metering members and provided with throwing elements (20, 53), the material to be broadcast, situated in the hopper, being feedable to said centrifugal discs in adjustable quantities, the centrifugal disc(s) having a bearing housing (37, 55, 56) and being displaceable in position relative to the metering members in an substantially horizontal plane, so that the position of the delivery face on the centrifugal disc(s) is variable, characterised in that, for the adjustment of the centrifugal disc(s) (11, 14, 51, 52), the bearing housing (37, 55, 56) is displaceably disposed in a slidable guide means (38, 57) so that the centrifugal disc(s) can be disconnected from its (their) drive means.

2. Centrifugal fertiliser broadcaster according to claim 1, characterised in that a straight slidable guide means (38, 57) is provided.

3. Centrifugal fertiliser broadcaster according to claim 1, characterised in that a curved slidable guide means is provided.

4. Centrifugal fertiliser broadcaster according to one or more of the preceding claims, characterised in that the frame (40) of the slidable guide means (38) is pivotably disposed on the frame (1) of the centrifugal fertiliser broadcaster.

5. Centrifugal fertiliser broadcaster according to one or more of the preceding claims, characterised in that the slidable guide frame (38) is displaceable and displaceable in various positions.

6. Centrifugal fertiliser broadcaster according to one or more of the preceding claims, characterised in that the centrifugal disc bearing housing (37, 55, 56) is displaceable inwardly of the slidable guide means (38, 57) and adjustable into various positions.

7. Centrifugal fertiliser broadcaster according to one or more of the preceding claims, characterised in that a remote-controllable adjustment device is provided for the displacement of the centrifugal disc bearing housing.

8. Centrifugal fertiliser broadcaster according to one or more of the preceding claims, characterised in that a remote-controllable adjustment device is provided for the displacement of the slidable guide frame.

9. Centrifugal fertiliser broadcaster according to one or more of the preceding claims, characterised in that the centrifugal disc(s) is (are) drivable by means of hydraulic motor(s).

10. Centrifugal fertiliser broadcaster according to one or more of the preceding claims, characterised in that the centrifugal disc is driven by a transmission unit (26) via a telescopic shaft (33, 36), and in that the two portions (33', 33'', 36', 36'') of the telescopic shaft (33, 36) become disengaged when the centrifugal disc (11, 14) is displaced in order to turn-off the centrifugal fertiliser broadcaster (calibrating process).

11. Centrifugal fertiliser broadcaster according to one or more of the preceding claims, characterised in that the slidable guide means (38, 57) has such a length that the centrifugal disc (11, 14, 51, 52) is completely slidable beneath the metering means (9, 50).

12. Centrifugal fertiliser broadcaster according to one or more of the preceding claims, a guiding device (43, 44) being disposed in the lateral external region of the centrifugal disc (11, 14), characterised in that the guiding device (43, 44) is so disposed that it is adjusted or displaced with the centrifugal disc (11, 14).

13. Centrifugal fertiliser broadcaster according to one or more of the preceding claims, characterised in that a through-aperture is situated in the centrifugal disc, and in that this aperture is provided in the shadow of a throwing element.

## Revendications

1. Epandeur centrifuge d'engrais comportant un réservoir d'alimentation (2, 46) dont la zone inférieure est munie d'organes de dosage (10, 50) et des disques d'épandage (11, 14, 51, 52) prévus sous les organes de dosage, entraînés en rotation et comportant des éléments d'éjection (20, 53), disques d'épandage qui reçoivent le produit à distribuer contenu dans le réservoir, suivant des quantités réglables, le ou les disques d'épandage comportant un carter de palier (37, 55, 56), étant réglables en position par rapport aux organes de dosage dans un plan sensiblement horizontal, pour que la position de la surface d'émission puisse être modifiée par rapport au(x) disque(s), caractérisé en ce que pour régler le(s) disque(s) d'épandage (11, 14, 51, 52) le carter de palier (37, 55, 56) est monté coulissant dans un guide de coulissement (38, 57) pour permettre de débrayer le(s) disque(s) d'épandage de leur moyen d'entraînement.

2. Epandeur centrifuge d'engrais selon la revendication 1, caractérisé en ce que le guide de coulissement est rectiligne (38, 57).

3. Epandeur centrifuge d'engrais selon la revendication 1, caractérisé en ce que le guide de coulissement est courbe.

4. Epandeur centrifuge d'engrais selon une ou plusieurs des revendications précédentes, caractérisé en ce que le châssis (40) du guide de coulissement (38) est monté pivotant sur le châssis (1) de l'épandeur centrifuge d'engrais.

5. Epandeur centrifuge d'engrais selon une ou plusieurs des revendications précédentes, caractérisé en ce que le châssis du guide de coulissement (38) est réglable et peut se bloquer dans différentes positions.

6. Epandeur centrifuge d'engrais selon une ou plusieurs des revendications précédentes, caractérisé en ce que le carter du palier des disques d'épandage (37, 55, 56) est réglable dans le guide de coulissement (38, 57) et peut se mettre dans différentes positions.

7. Epandeur centrifuge d'engrais selon une ou plusieurs des revendications précédentes, caractérisé en ce qu'il est prévu un dispositif de réglage télécommandé pour régler le carter de palier des disques d'épandage.

8. Epandeur centrifuge d'engrais selon une ou plusieurs des revendications précédentes, caractérisé par un dispositif de réglage télécommandé pour régler le châssis du guide de coulissement.

9. Epandeur centrifuge d'engrais selon une ou plusieurs des revendications précédentes, caractérisé en ce que le ou les disques d'épandage sont entraînés par un ou des moteurs hydrauliques.

10. Epandeur centrifuge d'engrais selon une ou plusieurs des revendications précédentes, caractérisé en ce que les disques d'épandage sont entraînés par une transmission (26) par l'intermédiaire d'un arbre télescopique (33, 36) et lors du déplacement des disques d'épandage (11, 14) pour effectuer des essais de distribution de l'épandeur centrifuge (opération de tarage), on peut mettre hors prise les deux parties (33', 33'', 36', 36'') de l'arbre télescopique (33, 36).

11. Epandeur centrifuge d'engrais selon une ou plusieurs des revendications précédentes, caractérisé en ce que le guide de coulissement (38, 57) a une longueur telle que les disques d'épandage (11, 14, 51, 52) puissent être dégagés complètement par coulissement en dessous du dispositif de dosage (9, 50).

12. Epandeur centrifuge d'engrais selon une ou plusieurs des revendications précédentes, un dispositif de guidage (43, 44) étant prévu dans la plage extérieure latérale des disques d'épandage (11, 14), épandeur caractérisé en ce que le dispositif de guidage (43,44) est monté pour pouvoir être réglé ou déplacé avec les disques d'épandage (11, 14).

13. Epandeur centrifuge d'engrais selon une ou plusieurs des revendications précédentes, caractérisé en ce qu'un orifice de passage est prévu dans le disque d'épandage pour que cet orifice se trouve à l'ombre d'un élément d'éjection.
